# EUROPEAN PATENT SPECIFICATION

(11) **EP 1 094 595 B1**
(45) Date of publication and mention of the grant of the patent: **27.01.2010**
(21) Application number: 00122850.1
(22) Date of filing: 20.10.2000
(51) Int. Cl.: H02P 6/14, H02P 6/22, H02P 6/00

(54) **Control device for a permanent magnet synchronous motor**
Regelungsvorrichtung für einen Permanentmagnet-Synchronmotor
Appareil constitué par un circuit de commande pour moteur synchrone avec un rotor à aimant permanent

(30) Priority: 21.10.1999 IT TO990912
(43) Date of publication of application: 25.04.2001
(73) Proprietor: Askoll P&C S.r.l., 10024 Moncalieri (TO) (IT)
(72) Inventor: Alvaro, Nicolino, 10132 Torino (IT); Acquaviva, Sebastiano, 10025 Pino Torinese (Torino) (IT)
(74) Representative: Botti, Mario

(56) References cited:
- PATENT ABSTRACTS OF JAPAN vol. 013, no. 348 (E-799), 4 August 1989 (1989-08-04) & JP 01 107696 A (FUJITSU LTD), 25 April 1989 (1989-04-25)
- PATENT ABSTRACTS OF JAPAN vol. 1997, no. 07, 31 July 1997 (1997-07-31) & JP 09 065680 A (MATSUSHITA ELECTRIC IND CO LTD), 7 March 1997 (1997-03-07)
- PATENT ABSTRACTS OF JAPAN vol. 012, no. 362 (E-663), 28 September 1988 (1988-09-28) & JP 63 114587 A (TOKYO ELECTRIC CO LTD), 19 May 1988 (1988-05-19)

## Description

The present invention relates to a control circuit device for a synchronous electric motor with a permanent magnet rotor with which are associated sensor means operable to provide electrical signals indicative of its angular position, and a stator which includes at least one winding having an intermediate tap which divides it into first and second winding portions.

Document US-A-5159255 discloses a control circuit device for an alternative current electric induction motor with which are associated sensor means operable to provide electrical signals indicative of its angular position, and a stator which comprises at least one winding having an intermediate tapping which divides it into first and second winding portions, the circuit device comprising: a pair of supply terminals intended to be connected to an alternating voltage supply source; a switching circuit connected to an end terminal and to the intermediate tapping; timer means coupled to the said switching circuit, and a synchronisation circuit coupled to the said position sensor means.

The circuit device according to the invention comprises
a pair of supply terminals intended to be connected to an AC voltage supply source,
a switching circuit connected to an end terminal and to the intermediate tap of the stator winding and operable, each time it is activated , to assume a first and then a second condition in which it allows coupling of the said voltage source to a first portion of the stator winding and the whole winding respectively;
timing means coupled to the said switching circuit and operable to cause it to pass from the first to the second condition when a reference time period after the application of voltage to the said supply terminals has passed and
a synchronisation circuit coupled to the said position sensor means and arranged to control the flow of current in at least the said first portion of the stator winding in a predetermined manner in dependence on the polarity of the current delivered from the said source and the instantaneous position of the rotor, and operable in the starting phase of the motor to cause rotation at progressively increasing speed until reaching, in a time less than the reference time period, a synchronisation speed corresponding to the frequency of the alternating supply voltage.

Further characteristics and advantages of the invention will become apparent from the following detailed description given purely by way of non-limitative example with reference to the attached drawings, in which:
Figure 1 is a schematic representation of a synchronous electric motor with a permanent magnet rotor;
Figures 2 and 3 are schematic block circuit diagrams of two different embodiments of a circuit device according to the invention; and
Figures 4 and 5 are detailed electric diagrams of two circuit devices according to the invention, corresponding to the block diagrams of Figure 2 and Figure 3 respectively.

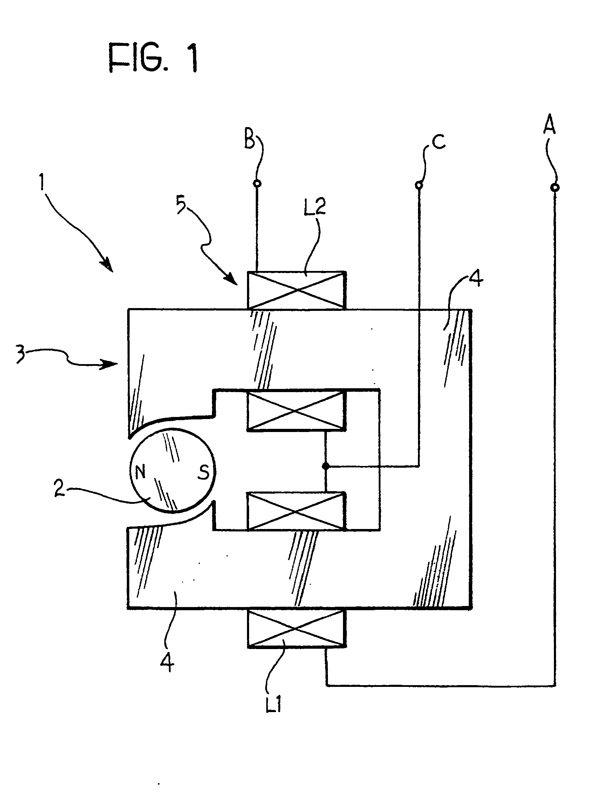

In Figure 1 a synchronous electric motor is generally indicated with the reference numeral 1. In a manner known per se this electric motor comprises a permanent magnet rotor 2 mounted rotably between the poles of a stator generally indicated 3.

The stator 3 comprises an essentially C or U shape stack of laminations 4 carrying a stator winding generally indicated 5. In the exemplary embodiment illustrated the stator winding 5 comprises two portions or coils L1 and L2 wound onto different arms of the stack 4 of laminations. The end terminals of the stator winding 5 are indicated A and B, whilst an intermediate tap is indicated C. The portion L1 of the winding lies between terminals A and C whilst the portion L2 of the winding lies between terminals C and B.

In an alternative to the embodiment shown in Figure 1 the stator winding 5 could comprise a single coil wound on a single arm of the stack of laminations 4, but in any event provided with a central tapping C.

If the synchronous electric motor 1 is of single phase type as in the example shown in Figure 1, conveniently, for the purpose of ensuring it starts in a predetermined direction the air gap between the poles of the stack of laminations 4 of the stator and the rotor 2 is made asymmetric in a manner known per se.

Although the present description makes reference to a single phase synchronous electric motor with a rotor having two poles, the invention is not limited in its application to such a motor, but is applicable to polyphase motors with N rotor poles in general.

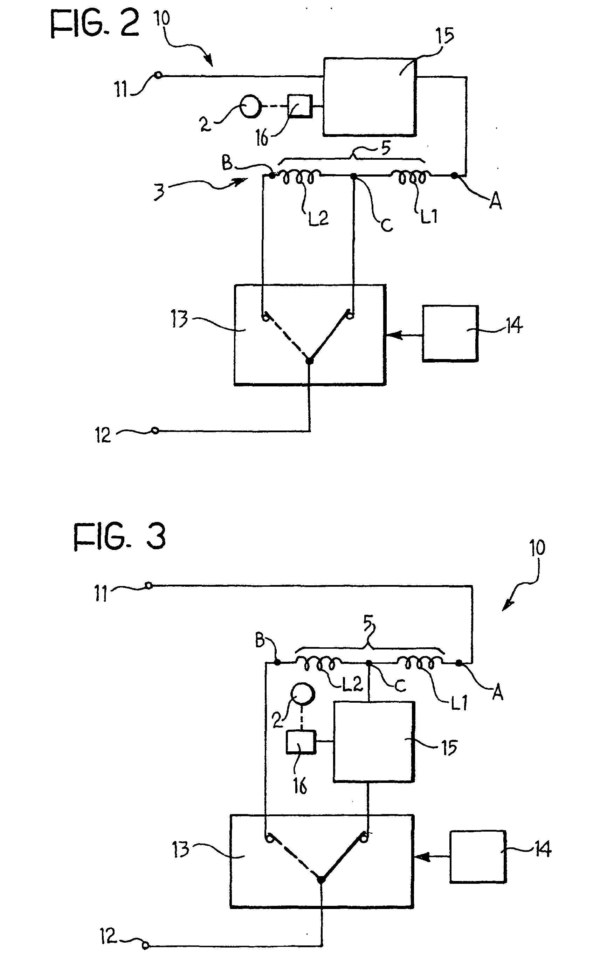

In Figure 2 a control circuit device according to the invention is generally indicated 10. This circuit device comprises two supply terminals 11 and 12 intended to be connected to an AC voltage supply source, for example the mains electric network operating at a fixed frequency, for example 50 Hz in Europe or 60 Hz in the United States.

The circuit 10 of Figure 2 includes a switching circuit 13 connected at one side to the supply terminal 12 and at the other side to the terminal B and C of the stator winding 5 of the motor.

As will become more clearly apparent hereinafter the switching circuit 13 is operable, whenever it is activated after connection of the supply terminals 11 and 12 to the voltage source, to assume initially a first and then a second condition in which it allows coupling to this source of the first portion L1 of the stator winding, and respectively, of the entire winding L1 and L2. Purely by way of explanation, in Figure 2 the block corresponding to the switching circuit 13 has been graphically indicated as a switch the position of which indicated in solid outline corresponds to the said first condition and the position of which illustrated in broken outline corresponds to the second condition.

The switching circuit 13 is connected to a timing circuit 14. This timing circuit is operable to cause the switching circuit 13 to pass from the first to the second condition when a reference time period after the application of voltage to the supply terminals 11 and 12 has passed.

The circuit 10 of Figure 2 again comprises a synchronisation circuit 15 coupled to the position sensor device 16 associated with the rotor 2 of the electric motor. The synchronisation circuit 15 is arranged to control the flow of current in the first portion L1 of the stator winding 5 and, respectively, in the entire winding 5, in dependence on the polarity of the current flowing between the terminals 11 and 12, and the instantaneous position of the rotor 2, depending on the operating condition of the switching circuit 13.

In particular, when the circuit 10 is coupled to the AC voltage supply source the switching circuit 13 initially assumes the first above - defined operating condition. In this condition, the starting condition of the synchronous motor 1, the synchronisation circuit 15, in a manner known per se, controls the flow of current in the first portion L1 of the stator winding 5 and therefore causes starting in a predetermined direction of rotation of the rotor 2 at a progressively increasing speed until it reaches, in a time less than the reference time period established by the timer 14, a synchronisation speed corresponding to the frequency of the alternating supply voltage.

At the end of the reference time period the timing circuit 14 causes the switching circuit 13 to pass to the second operating condition in which this switching circuit then remains as long as the terminals 11 and 12 have the AC voltage supply remains applied thereto. In this condition, the steady running condition of the motor 1, the synchronisation circuit 15 controls the flow of current to the entire winding 5 of the stator.

In Figure 3 there is shown another control circuit according to the invention. In this Figure the parts and elements already described are again given the same alphanumeric reference symbols.

In the variant according Figure 3, the control circuit 10 of the invention differs from that of Figure 2 in the fact that the synchronisation circuit 15 with associated angular position sensor 16 is no longer disposed between the terminal A of the stator winding 5 and the supply terminal 11, but rather between the intermediate tapping C of this winding and the switching circuit 13. The synchronisation circuit 15 is in particular connected to the switching circuit 13 in such a way that it is operative when the switching circuit 13 assumes the first operating condition (corresponding to the position shown in solid outline of the switch which is indicatively illustrated in the block 13 of the switching circuit). The circuit of Figure 3 operates as follows. When the terminals 11 and 12 are connected to the voltage supply source the switching circuit 13 assumes the first operating condition and remains in this condition as long as the characteristic time period of the timing circuit 14 has not passed. In this condition the synchronisation circuit 15 controls the current to flow in the first portion L1 of the stator winding 5 in such a way as to cause the rotor 2 to start and progressively increase in speed of rotation until it reaches the synchronisation speed in a time less than the characteristic time period of the timing device 14.

When this time period has elapsed the timer 14 causes the switching circuit 13 to pass to the second operating condition (qualitatively illustrated by the position shown in broken outline in Figure 3). In this condition the whole winding of the stator 5 is directly connected between the supply terminals 11 and 12. The motor then functions in synchronism with the frequency of the supply voltage. The synchronisation circuit 15 is on the other hand no longer operative.

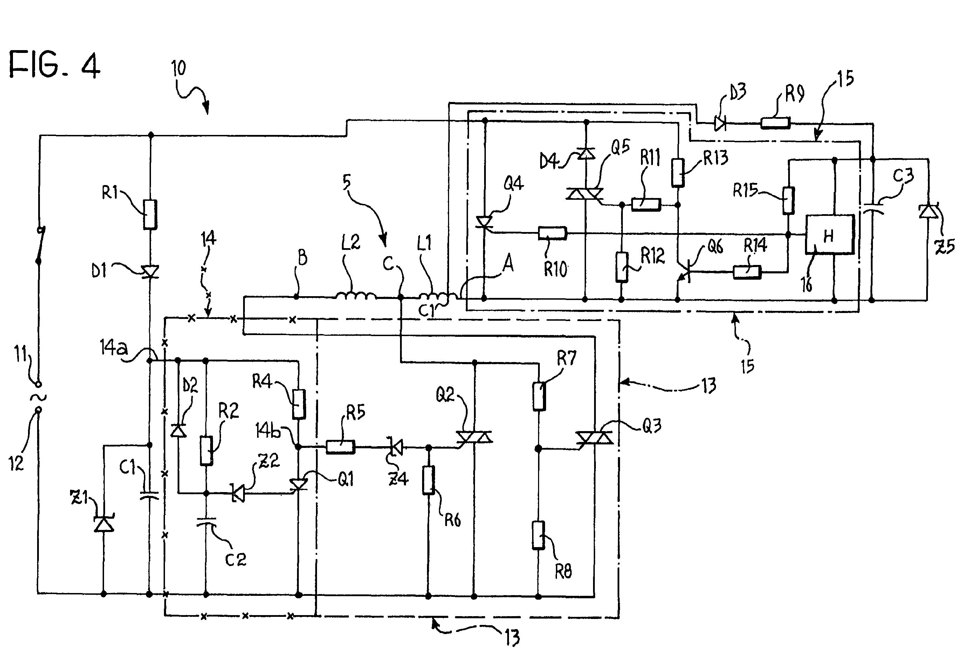

In Figure 4 there is shown a detailed embodiment of a circuit corresponding to the block diagram of Figure 2.

In the circuit of Figure 4 there is provided , between the supply terminals 11 and 12, a DC voltage supply cell of type known per se, comprising a resistor R1, a rectifier diode D1 , and capacitor C1 in parallel with which is connected a voltage stabiliser zener diode Z1. The cathode of this diode is connected to the supply input 14a of the timer circuit 14. This timer circuit includes an RC circuit including a resistor R2 and capacitor C2, a diode D2 in parallel with the resistor R2, a zener diode Z2 the cathode of which is connected to the junction between the resistor R2 and the capacitor C2 and the anode of which is connected to the gate of SCR Q1. This SCR is connected essentially between the input 14a of the timer circuit 14 and the supply terminal 12 in series with the resistor R4.

In operation, when the terminal 11 and 12 are connected to an AC voltage supply source the capacitor C2 starts to charge with a time constant defined by its capacity and the resistance of the resistor R2. When the volt on the capacitor C2 reaches a value substantially equal to the zener voltage of the diode Z2 the SCR Q1, initially turned off, becomes conductive and its anode consequently passes from a "high" level potential to a "low" level potential. The commencement of conduction of Q1 represents the end the timing period of the circuit 14.

In the embodiment shown in Figure 4 the switching circuit 13 comprises two triacs Q2 and Q3.

The triac Q2 is connected between the intermediate tapping C of the stator winding 5 and the supply terminal 12. The gate of this triac is connected to the anode of Q1 or rather to the output of the timing circuit 14, via a zener diode Z4 and a resistor R5. A resistor R6 is connected between the gate of Q2 and the supply terminal 12.

The triac Q3 is connected between the terminal B of the stator winding 5 and the supply terminal 12. Its gate is connected to the intermediate tapping C of the stator winding 5 via a resistor R7, and to the supply terminal 12 by a further resistor R8.

The arrangement is such that when the supply terminal 11 and 12 are connected to the voltage source the output 14b of the timer circuit 14 is at a "high " level the triac Q2 is then conductive, whilst the triac Q3 is turned off. In this condition, the starting phase of the motor, the current from the supply terminals 11 and 12 can flow through the synchronisation circuit 15 the first portion L1 of the stator winding 5 and the triac Q2. Flow of current is controlled by the synchronisation circuit 15.

When at the end of the initial or starting phase the output 14b of the timer circuit 14 goes to "low" level the triac Q2 is turned off and correspondingly the triac Q3 becomes conductive. In this condition the flow of current between the terminals 11 and 12 takes place through the synchronisation circuit 15, the entire stator winding 5, that is both portions L1 and L2 of this winding, and the triac Q3. The flow of current is again controlled by the synchronisation circuit 15, however, in perfect synchronism with the frequency of the supply voltage.

In the embodiment shown in Figure 4 the synchronisation circuit 15 is associated with a Hall effect sensor 16 to detect the position of the rotor. For biasing of this sensor there is provided a DC voltage supply cell of type known per se comprising a rectifier diode D3 in series with a resistor R9 and a capacitor C3 in parallel with which is connected a voltage stabiliser zener diode Z5. The anode of the rectifier diode D3 is connected to an intermediate tap C1 of the portion L1 of the stator winding 5.

The synchronisation circuit 15 comprises an SCR Q4 the anode of which is connected to the supply terminal 11 and the cathode of which is connected to the terminal A of the stator winding. The gate of Q4 is connected to the output of the sensor 16 via a resistor R10.

In parallel to Q4 the synchronisation circuit 15 comprises a triac Q5 in series with which is connected a diode D4 the cathode of which is connected to the supply terminal 11. Overall Q5 and D4 behave as an SCR disposed in anti-parallel with Q4. The gate of the triac Q5 is connected to the emitter of a transistor Q6 via a resistor R11. A resistor R12 connects the gate of Q5 to the terminal A of the stator winding. A further resistor R13 is connected between the collector of Q6 and the cathode of D4.

The transistor Q6 is of npn type the emitter of which connected to the terminal A of the stator winding. The base of this transistor is connected to the output of the sensor 16 via a resistor R14.

A resistor R15 is connected between the output of the sensor 16 and the cathode of the zener diode Z5.

Upon commencement of operation, that is to say when a voltage is applied between the terminals 11 and 12, the sensor 16 is initially not supplied in that the capacitor C3 is discharged. In this condition the output from the sensor 16 is at "low" level so that the transistor Q6 is turned off, triac Q5 is enabled to conduct current, and Q4 is switched off. In this condition a positive half-wave of current can flow through the portion L1 of the stator winding by passing through the resistors R13, R11 and R12 (as well as the triac Q2 which is enabled to conduct). A negative half-wave of current can flow in L1 by passing through Q2, Q5, and D4. The rotor starts to rotate.

After the capacitor C3 is charged and the sensor 16 receives supply voltage the output of this sensor passes after a short time to the "high " level causing Q5 to switch off and Q4 to become conductive.

The sensor 16 then pilots Q4 and Q5 to conduct alternately in dependence on the instantaneous angular position of the rotor until the speed of this rotor reaches the synchronisation with the frequency of the alternating supply voltage.

As previously mentioned, when the characteristic time period of the timer circuit 14 ends the triac Q2 is turned off and the triac Q3 is enabled to conduct. In running conditions, that is to say, after reaching the synchronisation speed, the alternating current which flows in the synchronisation circuit 15 and in the triac Q3 flows through the entire stator winding 5.

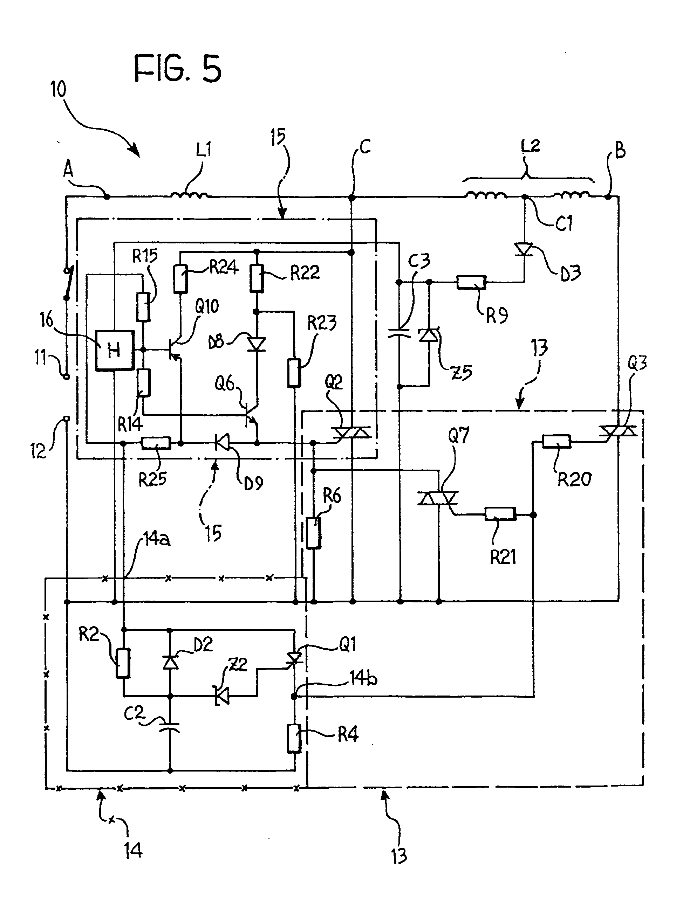

The variant embodiment shown in Figure 5 mirrors the circuit architecture of Figure 3. In Figure 5 the components already described with reference to Figure 4 are again allocated the same alphanumeric reference symbols. The use of the same alphanumeric reference symbols does not, however, imply that these components have the same characteristic magnitudes, for example of resistance or capacity, as are suitable for the embodiment of Figure 4.

In the circuit according to Figure 5 the timer circuit 14 is similar to that previously described with reference to Figure 4 from which it differs in that the output 14b of this circuit is now tapped off from the cathode of Q1. The resistor R4 is disposed between this cathode and the supply terminal 12. Consequently, at the end of the characteristic reference period the output of the timer circuit passes from " low" level to "high".

In the circuit of Figure 5 there is provided a single DC voltage supply cell for the timer circuit 14 and the angular position sensor 16. This cell comprises the rectifier diode D3, the resistor R9, the capacitor C3 and the zener diode Z5 the cathode of which is connected both to the supply terminal of the sensor 16 and to the supply terminal 14a of the timer circuit 14.

The switching circuit 13 of Figure 5 also, in this case, comprises two triacs Q2 and Q3, connected between the supply terminal 12 and the intermediate tap C and, respectively, between the said supply terminal 12 and the terminal B of the stator winding.

The output 14b of the timer circuit 14 is connected to the gate of Q3 via a resistor R20 and to the gate of a further triac Q7 through a resistor R21. This triac Q7 is disposed between the gate of Q2 and the supply terminal 12. The triac Q2 is shared between the switching circuit 13 and the synchronisation circuit 15. This latter comprises of a npn transistor Q6 the base of which is connected to the output of the Hall effect sensor 16 via a resistor R14. The collector of Q6 is connected to the cathode of a diode D8 the anode of which is connected to the intermediate tap C of the stator winding via a resistor R22. The emitter of Q6 is connected to the gate of Q2. A resistor R23 connects the anode of D8 to the supply terminal 12.

The output of the sensors 16 is moreover connected to the base of a pnp transistor Q10 the collector of which is connected to the intermediate tap C of the stator winding via a resistor R24.

A diode D9 is connected by its anode to the gate of Q2 and the cathode is connected to the emitter of Q10 and to the supply input 14a of the timer circuit 14 through a resistor R25.

In operation, as soon as the terminals 11 and 12 are coupled to the AC voltage supply source the output 14b of the timer circuit 14 is at 'low' level. Consequently the triac Q3 and Q7 are turned off, whilst the triac Q2 is enabled to conduct. In the initial or starting phase only the portion L1 of the stator winding has current flowing in it. This current is controlled by the synchronisation circuit 15 in a manner similar to that previously described.

At the end of the timing period of the circuit 14 the output 14b of this latter passes to 'high' level so that the triac Q3 and Q7 are enabled to conduct and the triac Q2 is turned off. In this condition the entire stator winding 5, that is to say both its portions L1 and L2 are directly coupled to the supply terminals 11 and 12 through the triac Q3, whilst the synchronisation circuit 15 is disabled.

The circuits described above can possibly be integrated with the addition of an auxiliary circuit of type known per se operable to detect a locked condition of the rotor 2 and in this case to cause discharge of the capacitor C2 of the timer circuit 14. This discharge in fact 'zeros' the timer circuit which can then start again and allow automatic restarting of the motor.

Naturally the principles of the invention remaining the same, the embodiments and construction can be widely varied with respect to what has been described and illustrated purely by way of non-limitative example, without by this departing from the scope of the annexed claims.

## Claims

1. A control circuit device (10) for a synchronous electric motor (1) with a permanent magnet rotor (2) with which are associated sensor means (16) operable to provide electrical signals indicative of its angular position, and a stator (3) which comprises at least one winding (5) having an intermediate tapping (C) which divides it into first and second winding portions (L1, L2);
the circuit device (10) comprising
a pair of supply terminals (11, 12) intended to be connected to an alternating voltage supply source,
a switching circuit (13) connected to an end terminal (B) and to the intermediate tapping (C) of the stator winding (5) and operable, each time it is activated, to assume a first and then a second condition in which it allows coupling first to the said voltage source of a first portion (L1) of the stator winding (5), and then the entire winding (5);
timer means (14) coupled to the said switching circuit (13) and operable to cause it to pass from the first to the second condition when a reference time period starting from the application of voltage to the said supply terminals (11, 12) has passed, and
a synchronisation circuit (15) coupled to the said position sensor means (16) and arranged to control the passage of current through at least the said first portion (L1) of the stator winding (5) in a predetermined manner in dependence on the polarity of the voltage applied by the said source and the instantaneous position of the rotor (2) in order to determine during the starting phase of the motor (1), the rotation of the rotor (2) at a progressively increasing speed until reaching, in a time less than or equal to the said reference time period, a synchronisation speed corresponding to the frequency of the alternating supply voltage.

2. A device according to claim 1 in which the synchronisation circuit (15) is interposed between one supply terminal (11) and the said first portion (L1) of the stator winding (5), and in which the said switching circuit (13) is connected between the terminals (B, C) of the second portion (L2) of the stator winding (5) and the other supply terminal (12) .

3. A device according to claim 1, in which the said stator winding (5) is connected between one supply terminal (11) and a terminal of the switching circuit (13), and the synchronisation circuit (15) is interposed between the intermediate tapping (C) of the stator winding (5) and another terminal of the switching circuit (13).

4. A device according to any preceding claim, in which the said position sensor means comprise a Hall effect sensor (16) .

5. A device according to any preceding claim, in which the said timer circuit (4) comprises an RC circuit (R2, C2) which controls the conduction of an electronic switch (Q1).

6. A device according to claims 4 and 5, in which there are provided DC voltage supply means (D1, C1, Z1; D3, C3, Z5) to provide a DC supply voltage to the sensor (16) and the timer circuit (14) .

7. A device according to claims 3 and 6 **characterised in that** the said supply means comprise a single passive supply circuit (D3, C3, Z5) comprising a rectifier diode (D3), a capacitor (C3) and a voltage stabiliser zener diode (Z5) in parallel with the said capacitor (C3).

8. A device according to any preceding claim in which there is provided an auxiliary circuit operable to detect a stationary condition of the rotor (2) in the presence of the alternating supply voltage, and to determine in this case zeroing and restarting of the said timer means (14).

9. A device according to any preceding claim, comprising means for detecting the achievement, during the starting phase, of the synchronisation condition, associated with the timer means (14) in such a way that the said reference time period corresponds substantially to the time necessary for the achievement of the synchronisation conditions.

## Patentansprüche

1. Steuerschaltungsvorrichtung (10) für einen Synchronmotor (1) mit einem Permanentmagnetrotor (2), dem ein Sensormittel (16) zugeordnet ist, das geeignet ist, elektrische Signale bereitzustellen, die dessen Winkelposition angeben, und einem Stator (3), der wenigstens eine Wicklung (5) mit einem Zwischenabgriff (C) aufweist, der diese in erste und zweite Wicklungsteile (L1, L2) teilt;
wobei die Steuervorrichtung (10) aufweist
ein Paar Versorgungsklemmen (11, 12), die zum Verbinden mit einer Wechselspannungsquelle vorgesehen sind,
einen Schaltkreis (13), der mit einer Endklemme (B) und dem Zwischenabgriff (C) der Statorwicklung (5) verbunden ist und geeignet ist, jedes Mal, wenn er aktiviert wird, einen ersten und dann einen zweiten Zustand anzunehmen, wobei er zuerst das Verbinden mit der Spannungsquelle eines ersten Teils (L1) der Statorwicklung (5) und dann der gesamten Wicklung (5) ermöglicht;
ein Zeitgebermittel (14), das mit dem Schaltkreis (13) verbunden ist und geeignet ist, diesen von dem ersten in den zweiten Zustand übergehen zu lassen, wenn eine Referenzzeitdauer ab dem Anlegen der Spannung an die Versorgungsklemmen (11, 12) verstrichen ist, und
eine Synchronisationsschaltung (15), die mit dem Positionssensormittel (16) verbunden ist und gestaltet ist, den Stromdurchgang wenigstens durch den ersten Teil (L1) der Statorwicklung (5) in einer vorherbestimmten Weise in Abhängigkeit von der Polarität der von der Quelle angelegten Spannung und der momentanen Position des Rotors (2) zu steuern, um während der Anlaufphase des Motors (1) die Drehung des Rotors (2) mit einer zunehmend anwachsenden Drehzahl zu bestimmen, bis innerhalb einer Zeit, die kleiner oder gleich der Referenzzeitdauer ist, eine Synchronisationsdrehzahl erreicht ist, die mit der Frequenz der Versorgungswechselspannung korrespondiert.

2. Vorrichtung nach Anspruch 1, wobei die Synchronisationsschaltung (15) zwischen eine Versorgungsklemme (11) und dem ersten Teil (L1) der Statorwicklung (5) eingefügt ist und wobei der Schaltkreis (13) zwischen die Klemmen (B, C) des zweiten Teils (L2) der Statorwicklung (5) und der anderen Versorgungsklemme (12) angeschlossen ist.

3. Vorrichtung nach Anspruch 1, wobei die Statorwicklung (5) zwischen eine Versorgungsklemme (11) und eine Klemme des Schaltkreises (13) angeschlossen ist und die Synchronisationsschaltung (15) zwischen den Zwischenabgriff (C) der Statorwicklung (5) und einer weiteren Klemme des Schaltkreises (13) eingefügt ist.

4. Vorrichtung nach einem der vorhergehenden Ansprüche, wobei das Positionssensormittel einen Halleffektsensor (16) aufweist.

5. Vorrichtung nach einem der vorhergehenden Ansprüche, wobei die Zeitgeberschaltung (4) einen RC-Kreis (R2, C2) aufweist, der das Leiten eines elektronischen Schalters (Q1) steuert.

6. Vorrichtung nach den Ansprüchen 4 und 5, wobei Gleichspannungsversorgungsmittel (D1, C1, Z1; D3, C3, Z5) vorgesehen sind, um dem Sensor (16) und der Zeitgeberschaltung (14) eine Versorgungsgleichspannung bereitzustellen.

7. Vorrichtung nach den Ansprüchen 3 und 6, **dadurch gekennzeichnet, dass** die Versorgungsmittel eine einzelne passive Versorgungsschaltung (D3, C3, Z5) umfassen, die eine Gleichrichterdiode (D3), einen Kondensator (C3) und eine Spannungsstabilisator-Zenerdiode (Z5) parallel zu dem Kondensator (C3) aufweist.

8. Vorrichtung nach einem der vorhergehenden Ansprüche, wobei eine Hilfsschaltung vorgesehen ist, die geeignet ist, einen stationären Zustand des Rotors (2) in Gegenwart der Versorgungswechselspannung zu detektieren und in diesem Fall das Nullstellen und Neustarten des Zeitgebermittels (14) zu bestimmen.

9. Vorrichtung nach einem der vorhergehenden Ansprüche, die ein Mittel zum Detektieren des Erreichens des Synchronisationszustands während der Anlaufphase aufweist, das mit dem Zeitgebermittel (14) derart verknüpft ist, dass die Referenzzeitdauer im Wesentlichen mit der Zeit korrespondiert, die zum Erreichen des Synchronisationszustands erforderlich ist.

## Revendications

1. Dispositif de circuit de commande (10) de moteur électrique synchrone (1) doté d'un rotor à aimant permanent (2) auquel sont associés des moyens de capteur (16) fonctionnels pour fournir des signaux électriques indicatifs de sa position angulaire, et un stator (3) qui comprend au moins un enroulement (5) qui présente une prise intermédiaire (C) qui le divise en une première partie et en une deuxième partie d'enroulement (L1, L2) ;
le dispositif de circuit (10) comprenant :
une paire de bornes d'alimentation (11, 12) destinées à être connectées à une source d'alimentation en tension alternative,
un circuit de commutation (13) connecté à une borne d'extrémité (B) et à la prise intermédiaire (C) de l'enroulement de stator (5) et fonctionnel, chaque fois qu'il est activé, de manière à prendre une premier état et ensuite un deuxième état dans lesquels il permet d'abord un couplage à ladite source de tension d'une première partie (L1) de l'enroulement de stator (5), et ensuite de tout l'enroulement (5) ;
des moyens de temporisateur (14) couplés audit circuit de commutation (13) et fonctionnels pour le faire passer du premier état au deuxième état quand une période de temps de référence qui commence à partir de l'application de la tension auxdites bornes d'alimentation (11, 12) s'est écoulée, et
un circuit de synchronisation (15) couplé auxdits moyens de capteur de position (16) et agencé de manière à commander le passage du courant à travers au moins ladite première partie (L1) de l'enroulement de stator (5) d'une façon prédéterminée en fonction de la polarité de la tension appliquée par ladite source et de la position instantanée du rotor (2) de manière à déterminer au cours de la phase de démarrage du moteur (1), la rotation du rotor (2) à une vitesse qui croît de façon progressive jusqu'à atteindre, en un temps inférieur ou égal à ladite période de temps de référence, une vitesse de synchronisation qui correspond à la fréquence de la tension d'alimentation alternative.

2. Dispositif selon la revendication 1, dans lequel le circuit de synchronisation (15) est intercalé entre une borne d'alimentation (11) et ladite première partie (L1) de l'enroulement de stator (5), et dans lequel ledit circuit de commutation (13) est connecté entre les bornes (B, C) de la deuxième partie (L2) de l'enroulement de stator (5) et l'autre borne d'alimentation (12).

3. Dispositif selon la revendication 1, dans lequel ledit enroulement de stator (5) est connecté entre une borne d'alimentation (11) et une borne du circuit de commutation (13), et le circuit de synchronisation (15) est intercalé entre la prise intermédiaire (C) de l'enroulement de stator (5) et une autre borne du circuit de commutation (13).

4. Dispositif selon l'une quelconque des revendications précédentes, dans lequel lesdits moyens de capteur de position comprennent un capteur à effet Hall (16).

5. Dispositif selon l'une quelconque des revendications précédentes, dans lequel ledit circuit de temporisateur (4) comprend un circuit RC (R2, C2) qui commande la conduction d'un commutateur électronique (Q1).

6. Dispositif selon les revendications 4 et 5, dans lequel sont fournis des moyens d'alimentation en tension continue (D1, C1, Z1 ; D3, C3, Z5) destinés à fournir une tension d'alimentation continue au capteur (16) et au circuit de temporisateur (14).

7. Dispositif selon les revendications 3 et 6, **caractérisé en ce que** lesdits moyens d'alimentation comprennent un seul circuit d'alimentation passif (D3, C3, Z5) qui comprend une diode de redressement (D3), un condensateur (C3) et une diode zener stabilisatrice de tension (Z5) montée en parallèle sur ledit condensateur (C3).

8. Dispositif selon l'une quelconque des revendications précédentes, dans lequel il est fourni un circuit auxiliaire fonctionnel de manière à détecter un état stationnaire du rotor (2) en présence de la tension d'alimentation alternative, et de manière à déterminer dans ce cas le passage par zéro et le redémarrage desdits moyens de temporisateur (14).

9. Dispositif selon l'une quelconque des revendications précédentes, comprenant des moyens destinés à détecter l'atteinte, au cours de la phase de démarrage, de l'état de synchronisation, associés aux moyens de temporisateur (14) de telle manière que ladite période de temps de référence corresponde sensiblement au temps nécessaire pour atteindre les états de synchronisation.
